# EUROPEAN PATENT SPECIFICATION

(11) **EP 1 785 226 B1**
(45) Date of publication and mention of the grant of the patent: **09.09.2009**
(21) Application number: 06023277.4
(22) Date of filing: 09.11.2006
(51) Int. Cl.: B23Q 16/02, B23Q 5/34

(54) **Adjusting device**
Einstellungsvorrichtung
Dispositif de réglage

(30) Priority: 10.11.2005 IT MO20050296
(43) Date of publication of application: 16.05.2007
(73) Proprietor: SCM Group S.p.A., 47900 Rimini (IT)
(72) Inventor: Spazzoli, Andrea, 47814 Bellaria (RN) (IT)
(74) Representative: Crugnola, Pietro

(56) References cited:
- EP-A2- 0 997 245
- DE-A1- 4 216 763
- FR-A1- 2 559 086
- GB-A- 120 997

## Description

The invention relates to an adjusting device arranged for adjusting in an initial adjusting step a mutual vertical position of copiers and respective trimming tools that are associable with trimming machines designed for trimming an edge previously applied to a workpiece made of wood or similar materials.

The copiers, an upper one and a lower one, are elements that are movable vertically along an axis Z and are arranged for respectively tracing an upper and lower profile of a workpiece to be trimmed, for example a shaped panel.

The copiers are mounted on a vertically movable support to which the trimming tool is fixed, for example comprising routing cutters provided with shaped plates.

In this way, in use, to a vertical movement of the copiers and thus of the support, there corresponds a vertical movement of equal amount of the trimming tool.

In particular, during operation, the copiers are kept constantly in contact, through elastic means, with the aforesaid workpiece, so as to detect an altimetric profile thereof.

In this way, the copiers set a work height for the trimming tool in function of the altimetric profile detected instant by instant.

Adjusting devices are known that are associable with copiers of trimming machines, arranged, in an initial adjusting step, for adjusting a position, along the aforesaid axis Z, of the copiers with respect to the corresponding trimming tool, in such a way that the latter removes from the edge of the workpiece a desired quantity of material.

In other words, the adjusting devices for example enable a pass depth of the trimming tool to be adjusted to remove a desired quantity of material from the edge and/or wear to the plates of the trimming tool to be compensated for.

Adjusting devices are known that adjust the position of the copiers with respect to the trimming tools through a comparator.

Subsequently, the copiers are locked in a desired position by means of a dedicated tool.

A drawback of such devices is that the aforesaid operations make adjusting excessively slow, with consequent increase in tooling time, and sometimes not very precise, with consequent deterioration of machining quality.

A further drawback is the need to provide highly qualified staff to perform such operations in order to limit the aforesaid imprecisions.

Further adjusting devices are known that use a screw and nut system for vertically moving the copiers, in such a way as to move them away from or move them towards the aforesaid trimming tool with respect to the axis Z.

A drawback of the aforesaid adjusting devices relates to the impossibility of performing very precise micrometric adjustments due to the existing play between the threads of the screw and of the nut, with consequent imprecision in execution and deterioration of machining quality.

A further drawback is that such devices require tools for tightening and/or loosening the screw with consequent greater expense.

FR 2559086 discloses a device for positioning or stopping a workpiece carrier of a conveying device in which workpieces are fed to different work stations following each other in a conveying direction. The workpiece carrier is provided with an external stop projecting therefrom transversely of the conveying direction and arranged to cooperate with a stop carrier element disposed outside the path of movement of the workpiece carrier and having a stop surface moveable into and out of the path of movement of the stop in the conveying direction. In one embodiment the stop element comprises a rotary cylinder extending longitudinally of the conveying direction and having a generally helical slide track engaging a stop projecting laterally from the workpiece carrier. The slide track comprises alternate sections extending at right angles to the axis of rotation of the cylinder and intermediate sections extending obliquely whereby successive stops are formed by the alternate right angle sections.

EP 0997245 discloses a unit for machining edges of panels envisages two operating units controlled by means which adjust and drive the units themselves and which comprise a respective structure that moves in both directions along an axis which is inclined with respect to a panel feed line and along a plane which is parallel to a vertical plane. Each structure is pivoted so as to swing in both directions in such a way as to drive each unit along defined straight and arched paths and in such a way as to define on the panel two or more working positions, in permanent contact with the panel, such that both the units cause a band applied to the edge to copy the shape of the edge itself.

An object of the invention is to improve the adjusting devices arranged for adjusting a mutual vertical position of copiers and respective trimming tools associable with trimming machines designed for trimming a previously applied edge on a workpiece made of wood or similar materials.

A further object is to make adjusting devices that enable rapid adjustment, thereby reducing tooling time.

A still further object is to obtain adjusting devices that enable very accurate micrometric adjustments to be made.

Still another object is to devise adjusting devices that for being used do not require highly qualified staff.

In an aspect of the invention, there is provided a machine as defined in claim 1.

Owing to this aspect of the invention, it is possible to devise an adjusting device that permits rapid and simple adjustment.

The invention can be better understood and implemented with reference to the attached drawings that illustrate an embodiment thereof by way of non limiting example in which:
Figure 1 is a perspective view of operating heads of a trimming machine provided with adjusting devices;
Figure 2 is a fragmentary enlarged section of an adjusting device in Figure 1;
Figure 3 is a perspective view of the adjusting device in Figure 2;
Figure 4 is a further perspective view of the adjusting device in Figure 3;
Figure 5 is a rear view of the adjusting device in Figure 3;
Figure 6 is a rear view showing some details of the adjusting device in Figure 3;
Figure 7 is a perspective view of Figure 6.

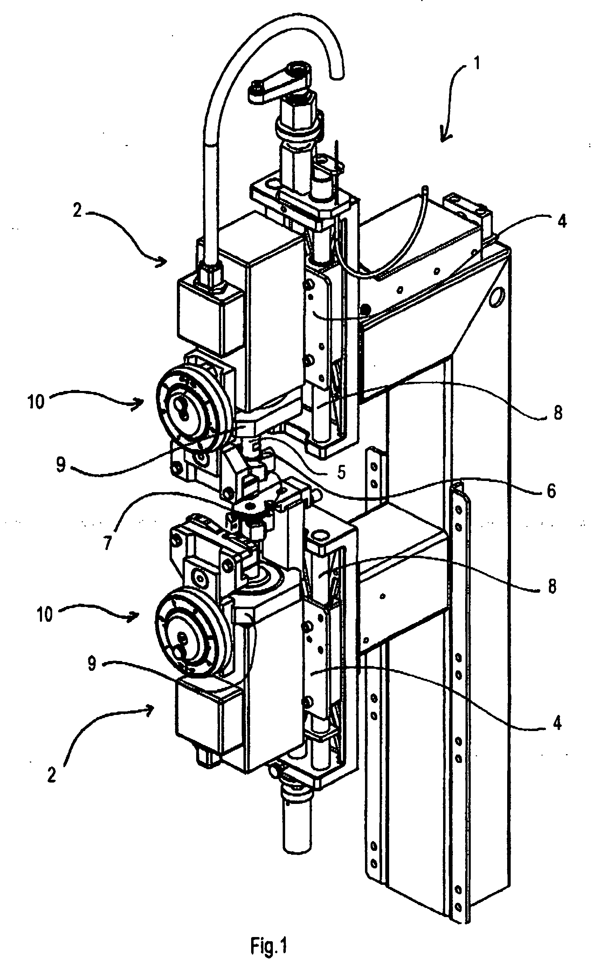

With reference to Figure 1, there are shown operating heads 2 of a trimming machine 1 arranged for trimming an edge previously applied to a panel made of wood or similar material, which is not shown.

The mutually facing operating heads 2 are arranged for machining an upper surface and a lower surface of the edge of the panel.

The operating heads 2 are fixed to plates 4 that are vertically movable along tube elements 8.

The operating heads 2 comprise a spindle 5 arranged for supporting during rotation a trimming tool 6, for example a routing cutter provided with shaped plates 7.

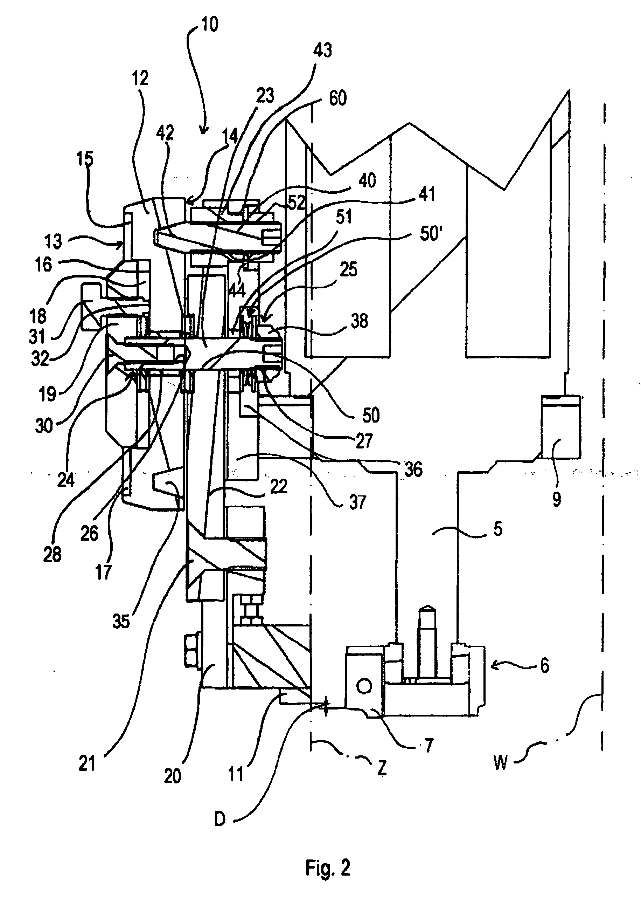

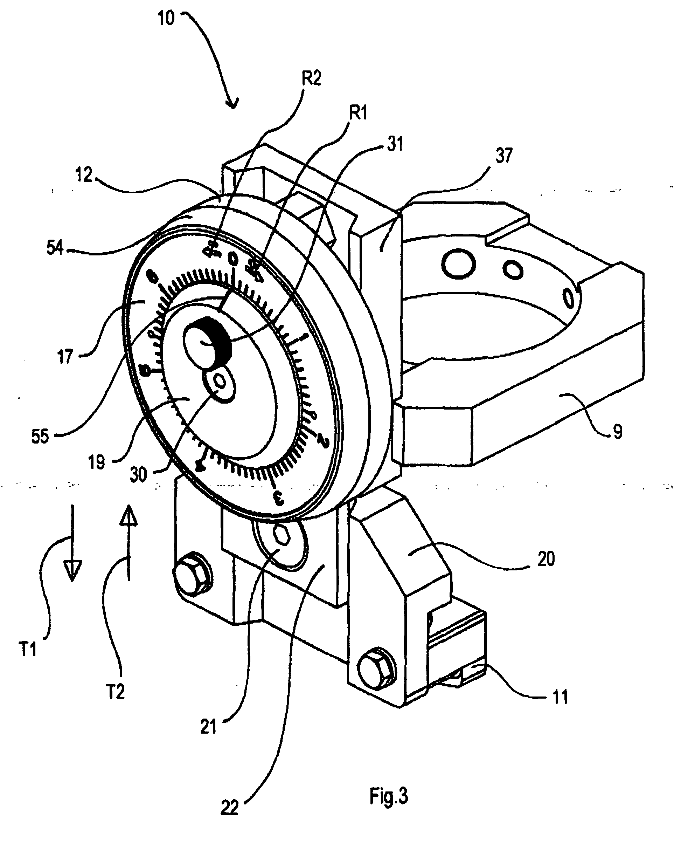

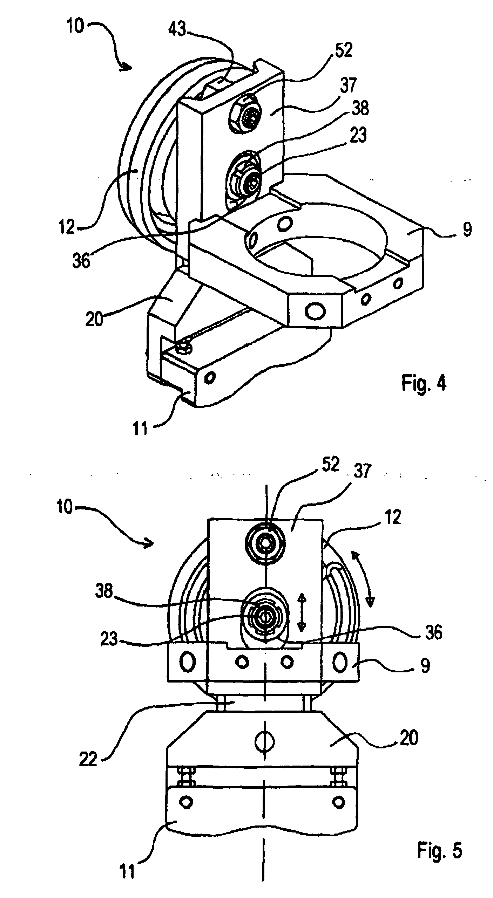

With each of the operating heads 2 there is further associated an adjusting device 10 fixed to the spindles 5 by means of a collar 9 (Figures 2 to 5).

The adjusting device 10 is arranged for adjusting, in an initial adjusting step, a work position, with respect to a substantially vertical adjusting axis Z of copiers 11, with which the trimming machine 1 is provided, and respective trimming tools 6.

Depending on a position of the copiers 11 and the trimming tools 6, this enables a preset quantity of material to be removed from the edge of the panel.

In other words, the adjusting device 10 enables a pass depth of the trimming tool 6 to be adjusted in such a way that the latter removes a desired quantity of material from the edge of the panel and/or wear to the plates 7 of the trimming tool 6 to be compensated for.

The copiers 11 are fixed, through a threaded connection, to a substantially trapezoid copier-holder support 20.

The copier-holder support 20 is associated, for example through a screw 21, with a slide 22.

The slide 22 with a substantially parallelpipedon shape with a rectangular base extends in use along a direction that is substantially parallel to the aforesaid adjusting axis Z and is provided with a through hole 50.

The adjusting device 10 further comprises an antirotation pin 23 engaging in the through hole 50, for example through interference.

The antirotation pin 23 extending in a transverse direction to the aforesaid adjusting axis Z comprises a first end 24 and a second end 25.

The first end 24 is provided with an internally threaded hole 26 whilst the second end 25 comprises an externally threaded portion 27.

The first end 24 is arranged for rotationally supporting a handwheel 12 having a substantially disc shape, between the antirotation pin 23 and the handwheel 12 there being interposed a bush 28.

The handwheel 12 is provided with a knurled side surface 54 in such a way as to facilitate the handling thereof, and comprises a mutually opposite first face 13 and second face 14.

The first face 13 comprises an annular surface 15 and a circular surface 16 that are concentric and positioned on parallel planes.

Between the annular surface 15 and the circular surface 16 a substantially cylindrical cavity 18 is defined.

The annular surface 15 is arranged for receiving a graduated scale element 17, whilst the cavity 18 is arranged for receiving, at least partially, a substantially disc-shaped locking element 19.

The locking element 19, provided with a reference incision 55, is fixed by means of a further screw 30 to the first end 24 of the pin 23.

In this way, in use, the handwheel 12 is interposed between the locking element 19 and the copier-holder support 20.

The locking element 19 is further provided with an arresting screw 31, having a surface 32 arranged for interacting with a portion of the circular surface 16.

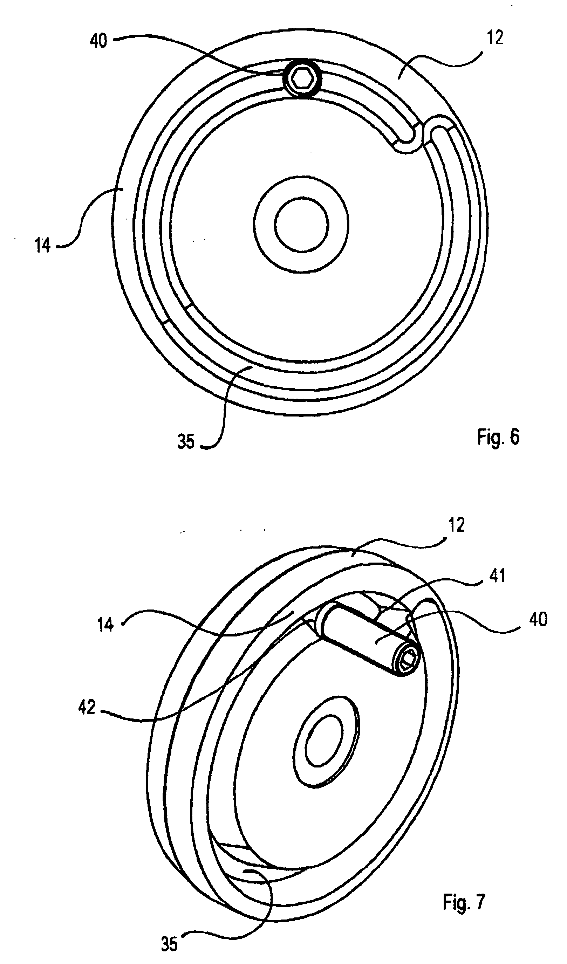

The second face 14 of the handwheel 12 comprises a groove 35 (Figures 6 and 7), spirally shaped, having a trapezoid profile section (Figure 2).

The second end 25 of the antirotation pin 23 is arranged for passing through a further hole 51 of a support 37, that is fixed to the collar 9.

The support 37 is provided with a slot 36 that is substantially concentric on the aforesaid further hole 51.

The second end 25 is coupled, through a threaded connection, to a nut 38, opposite the further screw 30, and is arranged for sliding along a direction substantially parallel to the adjusting axis Z in the slot 36, between the nut 38 and the slot 36 there being interposed washer means 50'.

In this way, in use, the slide 22 is interposed between the support 37 and the handwheel 12.

The support 37 is further provided with another hole 60 arranged for engaging with a wedge 40 with which the adjusting device 10 is provided.

The wedge 40 comprises an externally threaded side surface 41 and a substantially conical tip 42 arranged for engaging with the groove 35 in such a way as to support the handwheel 12 rotatingly in use.

The wedge 40 is associated with the support 37 through a further nut 52 and an adjusting bush 43, between the further nut 42 and the adjusting bush 43 there being interposed a washer 44.

In use, by tightening or loosening the wedge 40 suitably with respect to the adjusting bush 43, it is possible to set a depth of penetration of the wedge 40 with respect to the groove 35.

It should be noted that this allows the play between the wedge 40 and the groove 35 to be reduced, promoting micrometric adjustment of the adjusting device 10.

As said previously, the adjusting device 10 is used in an initial adjusting step, before the trimming machine 1 performs trimming of the edge of the panel, to adjust the corresponding position along the adjusting axis Z between the copiers 11 and the trimming tools 6 in such a way as to determine a desired pass depth of the latter with respect to the edge of the panel.

The operation of the adjusting device 10 is disclosed below. Due to a rotation of the handwheel 12 with respect to the wedge 40, the antirotation pin 23 moves in the slot 36 along a direction substantially parallel to the adjusting axis Z, dragging with it the slide 22 and consequently the copiers 11.

In this way it is possible to move the copiers 11 away from or towards the trimming tools 6 supported by the collar 9 fixed to the support 37.

In particular, let an initial configuration be hypothesised in which the trimming tools 6 are positioned with respect to the copiers 11 in such a way as to machine the edge of a panel with a maximum radius of the shaped plates 7.

In this initial configuration, the graduated scale 17 of the handwheel 12 is, with respect to the reference incision 55, in a position indicated by the number "0".

If it is desired to diminish this radius, and therefore the pass depth of the trimming tools, it is sufficient to rotate the handwheel 12 in the direction indicated by the arrow R2.

By doing so, the copiers 11 are consequently moved in the direction indicated by the further arrow T2 moving them away, with respect to the adjusting axis Z, from the trimming tools 6, increasing a distance D (Figure 2) between the copiers 11 and the respective tools 6, measured along a direction parallel to the adjusting axis Z.

In other words, there exists a correspondence between a rotation angle of the handwheel 12 and a movement along the adjusting axis Z of the copiers 11.

Once the desired position has been reached, the arresting screw 31 is used to lock the handwheel 12 in this position.

It should be noted that the arresting screw 31 acts as a safety element, inasmuch as the adjusting device 10 is irreversible, and thus prevents rectilinear movements of the copiers 11 that are not generated by the voluntary rotation of the handwheel 12, such as for example accidental blows.

On the other hand, if it is for example desired to compensate for the wear to the shaped plates 7, and thus maintain unvaried the pass depth of the trimming tools 6 despite the aforesaid wear, it is sufficient to rotate the handwheel 12 in the direction indicated by the other arrow R1.

By doing so, the copiers 11 are consequently moved in the direction indicated by the further other arrow T1, moving them, with respect to the adjusting axis Z, towards the trimming tools 6, reducing the distance D.

Once the desired position has been reached, the arresting screw 31 is used for locking the handwheel 12 in this position.

In an embodiment of the invention, there is provided an adjusting device provided with a variable "0".

It should be noted that in order to replicate the same pass depth on both surfaces of the panel it is necessary for the adjusting devices of the operating heads 2 to have the same adjustment.

Once a mutual vertical position has been set of the copiers 11 and the trimming tools 6 it is possible to move the operating heads 2 vertically in such a way as to preload the copiers 11 to improve the grip on the panel and resist machining stress.

Once the routing cutters have been driven, the copiers 11 are vertically movable along an axis W, substantially parallel to the adjusting axis Z, fixed relative to the operating heads 2 and are arranged for tracing respectively an upper edge zone and a lower edge zone of the shaped panel in such a way as to detect the altimetric profile thereof.

In this way, in use, to a vertical movement of the copiers 11 along the axis W, due to a height variation of the altimetric profile, there corresponds a vertical movement of equal amount of the trimming tool 6.

In other words, the copiers 11 set a work height for the trimming tool 6 in function of the altimetric profile detected instant by instant.

## Claims

1. A machine (1) for trimming edged panels comprising adjusting means (10) arranged for adjusting a corresponding position, with respect to an adjusting axis (Z), of a copier (11) with respect to a trimming tool (6), said adjusting means comprising continuous adjusting means (10), **characterised in that** said continuous adjusting means (10) is provided with slide means (22) movable along said adjusting axis (Z) with respect to said trimming tool (6) and arranged for supporting said copier (11), and with handwheel means (12) associated to said slide means (22) and comprising shaped groove means (35), said shaped groove means (35) having a spiral shape and being arranged for engaging rotationally with pin means (40) fixed along said adjusting axis (Z) with respect to said trimming tool (6).

2. Machine according to claim 1, wherein said pin means comprises wedge means (40).

3. Machine according to claim 1, or 2, wherein said shaped groove means (35) has in cross section a profile having a substantially trapezium shape.

4. Machine according to claim 2 or 3, wherein said wedge means (40) comprises a substantially conical tip (42).

5. Machine according to any one of claims 2 to 4, and further comprising setting means (43) engaging with said wedge means (40) and arranged for adjusting a penetration depth of said wedge means (40) with respect to said shaped groove means (35).

6. Machine according to any preceding claim, wherein said handwheel means (12) is associated with antirotation pin means (23) fixed to said slide means (22) arranged for preventing rotation of said slide means (22) with respect to said pin means (40).

7. Machine according to claim 6, wherein said antirotation pin means (23) is constrained to slide along a direction substantially parallel to said adjusting axis (Z) in guide means (36).

8. Machine according to claim 7, wherein said guide means (36) is obtained in supporting means (37) arranged for supporting said pin means (40).

9. Machine according to claim 8, wherein said supporting means (37) is associated with collar means (9) arranged for supporting said trimming tool (6).

10. Machine according to any preceding claim, wherein said adjusting axis (Z) is a substantially vertical axis.

11. Machine according to any preceding claim, wherein said handwheel means (12) comprises graduated scale means (17).

12. Machine according to any preceding claim, and further comprising locking means (31) arranged for locking said handwheel means (12) in a desired position.

## Patentansprüche

1. Maschine (1) zum Trimmen von mit Kante versehenen Paneelen, mit Justiermitteln (10), die zum Justieren einer entsprechenden Position bezüglich einer Justierachse (Z) einer Kopiervorrichtung (11) bezüglich eines Trimmwerkzeuges (6) ausgelegt sind, wobei die Justiermittel kontinuierliche Justiermittel (10) aufweisen, **dadurch gekennzeichnet, dass** die kontinuierlichen Justiermittel (10) mit Gleitmitteln (22), die entlang der Justierachse (Z) bezüglich des Trimmwerkzeuges (6) beweglich und zum Halten der Kopiervorrichtung (11) ausgelegt sind, und mit Handradmitteln (12) versehen sind, die den Gleitmitteln (22) zugeordnet sind und Formnutmittel (35) aufweisen, wobei die Formnutmittel (35) eine Spiralform aufweisen und zum in Dreheingriff kommen mit Stiftmitteln (40) ausgelegt sind, die entlang der Justierachse (Z) bezüglich des Trimmwerkzeuges (6) festgelegt sind.

2. Maschine nach Anspruch 1, wobei die Stiftmittel Keilmittel (40) aufweisen.

3. Maschine nach Anspruch 1 oder 2, wobei die Formnutmittel (35) im Querschnitt ein Profil aufweisen, das im Wesentlichen trapezförmig ist.

4. Maschine nach Anspruch 2 oder 3, wobei die Keilmittel (40) eine im Wesentlichen konische Spitze (42) aufweisen.

5. Maschine nach einem der Ansprüche 2 bis 4, weiter mit Stellmitteln (43), die mit den Keilmitteln (40) in Eingriff stehen und zum Justieren einer Eindringtiefe der Keilmittel (40) bezüglich der Formnutmittel (35) ausgelegt sind.

6. Maschine nach einem der vorhergehenden Ansprüche, wobei die Handradmittel (12) mit Antirotationsstiftmitteln (23) verbunden sind, die an den Gleitmitteln (22) festgelegt und zur Vermeidung einer Drehung der Gleitmittel (22) bezüglich der Stiftmittel (40) ausgelegt sind.

7. Maschine nach Anspruch 6, wobei die Antirotationsstiftmittel (23) darauf beschränkt sind, entlang einer Richtung im Wesentlichen parallel zur Justierachse (Z) in Führungsmitteln (36) zu gleiten.

8. Maschine nach Anspruch 7, wobei die Führungsmittel (36) in Haltemitteln (37) erhalten sind, die zum Halten der Stiftmittel (40) ausgelegt sind.

9. Maschine nach Anspruch 8, wobei die Haltemittel (37) mit Kragenmitteln (9) verbunden sind, die zum Halten des Trimmwerkzeuges (6) ausgelegt sind.

10. Maschine nach einem der vorhergehenden Ansprüche, wobei die Justierachse (Z) eine im Wesentlichen vertikale Achse ist.

11. Maschine nach einem der vorhergehenden Ansprüche, wobei die Handradmittel (12) Skalenmittel (17) aufweisen.

12. Maschine nach einem der vorhergehenden Ansprüche, weiterhin mit Verriegelungsmitteln (31), die zum Verriegeln der Handradmittel (12) in einer gewünschten Position ausgelegt sind.

## Revendications

1. Machine (1) pour le dressage de panneaux pourvus d'un chant, comprenant des moyens d'ajustage (10), prévus pour ajuster une position correspondante par rapport à un axe d'ajustage (Z), d'un copieur (11) par rapport à un outil de dressage (6), lesdits moyens d'ajustage comprenant des moyens d'ajustage continu (10), ***caractérisée en ce que*** lesdits moyens d'ajustage continu (10) sont munis de moyens de coulisse (22) mobiles le long dudit axe d'ajustage (Z) par rapport audit outil de dressage (6) et prévus pour supporter ledit copieur (11), et de moyens de volant de commande (12) associés auxdits moyens de coulisse (22) et comprenant de moyens de cannelure profilée (35), lesdits moyens de cannelure profilée (35) ayant une forme en spirale et étant prévus pour s'engager de manière rotative avec des moyens de broche (40) fixés le long dudit axe d'ajustage (Z) par rapport audit outil de dressage (6).

2. Machine selon la revendication 1, dans laquelle lesdits moyens de broche comprennent des moyens de coin (40).

3. Machine selon la revendication 1 ou 2, dans laquelle lesdits moyens de cannelure profilée (35) possèdent en section transversale un profil de forme sensiblement trapézoïdale.

4. Machine selon la revendication 2 ou 3, dans laquelle lesdits moyens de coin (40) comprennent une pointe sensiblement conique (42).

5. Machine selon l'une quelconque des revendications 2 à 4, et comprenant de plus des moyens de réglage (43) s'engageant avec lesdits moyens de coin (40) et prévus pour ajuster une profondeur de pénétration desdits moyens de coin (40) par rapport auxdits moyens de cannelure profilée (35).

6. Machine selon l'une quelconque des revendications précédentes, dans laquelle lesdits moyens de volant de commande (12) sont associés à des moyens de broche antirotation (23) fixés auxdits moyens de coulisse (22) prévus pour empêcher la rotation desdits moyens de coulisse (22) par rapport auxdits moyens de broche (40).

7. Machine selon la revendication 6, dans laquelle lesdits moyens de broche antirotation (23) sont contraints à glisser dans une direction sensiblement parallèle audit axe d'ajustage (Z) dans des moyens de guidage (36).

8. Machine selon la revendication 7, dans laquelle lesdits moyens de guidage (36) sont réalisés dans des moyens de support (37) prévus pour supporter lesdits moyens de broche (40).

9. Machine selon la revendication 8, dans laquelle lesdits moyens de support (37) sont associés à des moyens de collier (9) prévus pour supporter ledit outil de dressage (6).

10. Machine selon l'une quelconque des revendications précédentes, dans laquelle ledit axe d'ajustage (Z) est un axe sensiblement vertical.

11. Machine selon l'une quelconque des revendications précédentes, dans laquelle lesdits moyens de volant de commande (12) comprennent des moyens d'échelle graduée (17).

12. Machine selon l'une quelconque des revendications précédentes, et comprenant en outre des moyens de blocage (31) prévus pour bloquer lesdits moyens de volant de commande (12) dans une position désirée.
